# EUROPÄISCHE PATENTANMELDUNG

(11) **EP 1 842 899 A1**
(43) Veröffentlichungstag der Anmeldung: **10.10.2007**
(21) Anmeldenummer: 07005527.2
(22) Anmeldetag: 17.03.2007
(51) Int. Cl.: C10M 173/02

(54) **Kühlmittel zum Behandeln und Herstellen von Wafern**

(30) Priorität: 31.03.2006 DE 102006015539
(71) Anmelder: Goldschmidt GmbH, 45127 Essen (DE)
(72) Erfinder: Weyershausen, Bernd Dr., 45127 Essen (DE); Hennissen, Louis Dr., 91077 Dormitz (DE)

(57) **Zusammenfassung**

Gegenstand der Erfindung ist ein Kühlmittel zur Verwendung beim Herstellen und/oder Behandeln von Ingots und/oder Wafern wobei das Kühlmittel ein Tensid enthält, um die Qualität der Herstellung bzw. Behandlung zu verbessern.

## Beschreibung

Gegenstand der Erfindung ist ein Kühlmittel zur Verwendung beim Herstellen und/oder Behandeln von Ingots und/oder Wafern, ein Verfahren zum Herstellen und/oder Behandeln von Ingots und/oder Wafern mittels eines solchen Kühlmittels sowie die Verwendung eines Tensids beim Herstellen und/oder Behandeln von Ingots und/oder Wafern.

Der übliche Herstellungsprozess von Wafern beinhaltet bei den meisten Anwendungen unter anderem die folgenden Schritte:
- Herstellen eines sog. "Ingots", d.h. eines « baumstammartigen » Blocks des Wafermaterials
- Heraussägen von Wafern aus diesem Ingot
- Abschleifen der Wafer auf eine bestimmte Dicke
- Polieren der Waferoberfläche durch naßchemische und Schleifprozesse unter Verwendung eines Schleifmaterials

Für die meisten Anwendungen müssen die Oberflächen der Wafer optisch spiegelnd poliert sein. Hinsichtlich der Ebenheit der Wafer, der Perfektion der Politur und der Reinheit der Oberfläche gelten extreme Forderungen. Auf Wafern werden in der Halbleiterindustrie und Mikromechanik elektronische Bauelemente, vor allem integrierte Schaltkreise (IC, "Chip") oder mikromechanische Bauelemente durch verschiedene technische Verfahren hergestellt. Im Rahmen dieser verschiedenen technischen Verfahren bis zur Fertigstellung eines Mikrochips spielen auch Schleif- und Polierprozesse eine wichtige Rolle. Hierbei ist insbesondere das sogenannte "Rückseitenschleifen" d.h. ein erneutes Abschleifen des Wafers auf der Seite auf der keine Schaltkreise aufgebracht wurden auf die endgültige Dicke des Wafers von zentraler Bedeutung.

Bei den Behandlungsschritten, die ein Sägen oder Schleifen beinhalten, wird üblicherweise ein Kühlmittel verwendet. Dieses ist in den meisten Anwendungen nach dem Stand der Technik Wasser, meist deionisiertes Wasser.

Es sei angemerkt, dass das "Kühlmittel" neben der Kühlung z.B. bei Schleif-, Säge- und Polierprozessen auch dazu dient, abgeschliffenes Wafermaterial sowohl von der Oberfläche des zu bearbeitenden Materials als auch aus der Umgebung (Peripherie = z.B. Schleifkammer) zu entfernen. Somit müsste in diesem Schritt genauer von einem "Kühl- und Abtrennmittel bzw. Reinigungsmittel" gesprochen werden. Aus Gründen der Übersichtlichkeit wird in dieser Anmeldung jedoch ausschließlich von einem Kühlmittel gesprochen, im Rahmen der vorliegenden Erfindung wird unter dem Begriff "Kühlmittel" jedoch jedes flüssige oder nahezu flüssige Medium verstanden, welches in der Lage ist, eine oder mehrere der folgenden Funktionen auszuführen:
- Abführen von Wärme, die z.B. bei den Bearbeitungsprozessen des Ingots oder der Wafer entsteht, insbesondere beim Schleifen im Zusammenhang mit porösem Schleifmaterial
- Abführen von unerwünschtem bzw. abgetragenem Material
- Sauberhaltung/Reinhaltung der den eigentlichen Bearbeitungsprozess umgebenden Peripherie wie z.B. der Innenwände einer Schleifmaschine

Unter dem Begriff "Wafer" wird im Rahmen der folgenden Erfindung jedes Material verstanden, welches zum Aufbau von Schaltkreisen, insbesondere mikroskopisch kleinen Schaltkreisen verwendet werden kann. Insbesondere wird im Sinne der Erfindung unter dem Begriff "Wafer" jeder Halbleiterwerkstoff verstanden. Unter einem Halbleiterwerkstoff bzw. Halbleitermaterial versteht man einen Festkörper, dessen elektrische Leitfähigkeit stark temperaturabhängig ist und der von daher je nach Temperatur sowohl als Leiter als auch als Nichtleiter betrachtet werden kann. Die Leitfähigkeit eines Halbleiters nimmt mit steigender Temperatur zu, womit diese auch als Heißleiter bezeichnet werden. Die Leitfähigkeit lässt sich ferner durch das Einbringen von Fremdatomen aus einer anderen Hauptgruppe, das sogenannte Dotieren, in weiten Grenzen steuern. Bedeutung für die Mikroelektronik erlangen Halbleiter aber insbesondere dadurch, dass ihre Leitfähigkeit auch durch Anlegen einer Steuerspannung oder eines Steuerstroms (wie z. B. beim Transistor) verändert werden kann.

Zumeist wird als Wafermaterial Silizium oder im wesentlichen Silizium verwendet, es sei jedoch angemerkt, dass im Rahmen der folgenden Erfindung unter "Wafer" auch Halbleiterwerkstoffe aus z.B. Germanium, Gallium-Arsenid, Gallium-Nitrid, Indium-Phosphid, Aluminium-Gallium-Arsenid verstanden werden und die Erfindung auch auf Wafer aus diesen Materialien anwendbar ist, Wobei die vorgenannten Halbleiterwerkstoffe eine Auswahl darstellen und damit kein Anspruch auf Vollständigkeit erhoben oder gar eine Einschränkung vorgegeben werden soll.

Der Einsatz des Kühlmittels nach dem Stand der Technik hat jedoch bei einigen Anwendungen den Nachteil, dass das zu entfernende Material bzw. der beim Sägen, Schleifen oder Polieren entstehende Säge-, Schleif- oder Polierstaub nicht völlig von der Waferoberfläche und aus der Umgebung des Wafers beim Bearbeitungsprozess entfernt wird, so dass es in folgenden Arbeitsschritten zu Schädigungen des Wafers bis hin zur Produktion von Ausschusskommen kann. Gerade vor dem Hintergrund des zu verzeichnenden Trends hin zu immer dünneren Wafern spielt das vollständige Entfernen von gegebenenfalls der Waferoberfläche anhaftenden Partikeln des zu bearbeitenden Halbleiterwerkstoffes eine immer größere Rolle, da in diesem Fall eine Schädigung der Oberfläche bzw. oberflächennaher Schichten eine größere Tragweite besitzt.

Zudem hat sich herausgestellt, dass bei einigen Anwendungen nach dem Stand der Technik, die sich insbesondere auf Schleifprozesse der Wafer beziehen, der Schleifprozess unter Umständen nicht kontinuierlich betrieben werden kann, sondern es zu einem Stillstand kommen kann, wenn die entstehende Prozesswärme (Reibungshitze) nicht schnell genug abgeführt werden kann. Diese Stillstandszeit kann bis zu 8-10% der Gesamtzeit betragen.

Ferner muß nach dem Stand der Technik das Schleifmaterial einer Schleifscheibe bzw. eines Schleifrades ("grinding wheel")(ein aus gekörnten Schleif- und Bindemitteln hergestellter rotationssymmetrischer Körper, der in eine Schleifmaschine eingespannt wird und bei hohen Umdrehungszahlen z.B. einen Halbleiterwerkstoff bzw. Wafer durch feine Spanabhebung bearbeitet) in aller Regel etwa einmal pro Stunde nachgeschärft werden. Dies beansprucht etwa 5 Minuten, so dass in etwa ein weiteres Zwölftel der Gesamtzeit verloren geht.

Es stellt sich somit die Aufgabe, ein Kühlmittel, eine Verwendung eines Kühlmittels bei sowie ein Verfahren für die Herstellung und/oder Behandlung von Ingots und/oder Wafern bereitzustellen, durch welches die beschriebenen Nachteile überwunden oder zumindest weitgehend vermieden werden können.

Diese Aufgabe wird durch ein Kühlmittel gemäß Anspruch 1 gelöst. Demgemäß wird ein Kühlmittel zur Verwendung beim Herstellen und/oder Behandeln von Ingots und/oder Wafern bereitgestellt, dadurch gekennzeichnet, dass das Kühlmittel mindestens ein Tensid enthält.

Unter "Behandlung" wird dabei jeder Bearbeitungsprozess der Wafer und/oder des Ingot verstanden, insbesondere Sägen, Schleifen und/oder Polieren sowie Reinigen.

Überraschenderweise hat sich herausgestellt, dass durch den Zusatz eines Tensids oder eines Tensidgemisches sich bei den meisten Anwendungen die oben beschriebenen Probleme deutlich vermindern lassen oder sogar nicht mehr auftreten.

Unter einem "Tensid" im Sinne der vorliegenden Erfindung wird dabei jede Substanz verstanden, welches in der Lage ist, auf die Oberflächenspannung zwischen zwei Phasen einzuwirken.

Ohne auf eine Theorie festgelegt zu sein, wird für die positiven Eigenschaften des Tensids bzw. der Tensidmischung u.a. folgendes in Betracht gezogen:

In vielen Anwendungen beim Behandeln und Herstellen von Wafern werden Diamantschleifräder (sog. "grinding wheels") verwendet. Das abrasive Material bzw. die abrasive Schicht dieser Diamantschleifräder besteht aus natürlichen oder synthetischen Bindematerialien, die mit Diamantpartikeln unterschiedlicher Körnung (sog. "diamond grits") gemischt werden. Darüber hinaus ist das abrasive Material moderner Diamantschleifräder porös, um so eine bessere Kühlung bzw. den besseren Abtransport von Reibungshitze zu gewährleisten. Nach dem Stand der Technik werden üblicherweise abrasive Materialien bzw. Schichten mit einer Porosität (ausgedrückt in Mesh) von einigen hundert Mesh bis heute etwa Mesh 8.000 verwendet, wobei für die Zukunft abrasive Materialien bzw. Schichten mit einer Porosität von Mesh 10.000 und mehr anvisiert werden, da mit einer höheren Mesh Zahl, welche wiederum mit einer feineren Porenstruktur (geringere Porengröße) und geringeren Diamantkörnung korreliert, eine gleichmäßigere und glattere Waferoberfläche beim Schleifen erzielt werden kann.

Bei dem Zusatz des erfindungsgemäßen Tensids bzw. Tensidgemisches scheint es nun so zu sein, dass das Wasser überraschenderweise besser in die Lage versetzt wird, in die Poren des abrasiven Materials bzw. der abrasiven Schicht einzudringen, und so zu einem besseren Abtransport der beim Schleifen entstehenden Wärme zu führen. Darüber hinaus wurde überraschenderweise gefunden, dass durch den Einsatz des erfindungsgemäßen Tensids bzw. der erfindungsgemäßen Tensidmischung das Abriebmaterial bzw. der Schleifstaub weniger gut an der Waferoberfläche und an den Innenwänden der Schleifmaschine haftet und besser aus dem Prozess entfernt wird.

Gemäß einer bevorzugten Ausführungsform ist das Kühlmittel ein wasserbasierendes Kühlmittel, d.h. es enthält als wesentliche Komponente Wasser, wobei bevorzugt ist, dass das Wasser deionisiertes Wasser ist.

Gemäß einer bevorzugten Ausführungsform der vorliegenden Erfindung beträgt der Anteil an Tensid >0 bis ≤1 Gew-% des Kühlmittels.

Es sei angemerkt, dass gemäß der vorliegenden Erfindung das Kühlmittel ein Tensid oder ein Tensidgemisch aufweisen kann. Aus Gründen der Übersichtlichkeit und Einfachheit ist daher unter dem Begriff "Tensid" auch ein Tensidgemisch gemeint und es ist ggf. bevorzugt, dass alle Tenside innerhalb des Tensidgemisches und/oder das Tensidgemisch als Ganzes die beschriebenen Eigenschaften aufweisen.

Im vorliegenden Fall ist es somit - für den Fall, dass mehr als ein Tensid im Kühlmittel enthalten ist, bevorzugt, dass die Gesamtmenge an Tensid >0 bis ≤1 Gew-% des Kühlmittels beträgt.

Diese Menge hat sich für die meisten Anwendungen als besonders vorteilhaft herausgestellt. Bevorzugt beträgt der Anteil an Tensid ≥0.01 bis ≤0.5 Gew-% des Kühlmittels, besonders bevorzugt ≥0.1 bis ≤0.25 Gew-%.

Bevorzugt weisen 0,1 Gew.-% Tensid enthaltende wässrige (deionisiertes Wasser) Lösungen bei 20° und 0,5 Hz (Frequenz bei Messung der Oberflächenspannung mittels Blasendrucktensiometer) eine Oberflächenspannung von ≤ 35 mN/m, ferner bevorzugt ≤ 30 mN/m, sowie am meisten bevorzugt ≤ 25 mN/m auf.

Dies hat sich bei vielen Anwendungen innerhalb der vorliegenden Erfindung als vorteilhaft herausgestellt, da so insbesondere bei vielen Anwendungen innerhalb der vorliegenden Erfindung, die Schleifprozesse beinhalten ein besonders guter Wärmeabfluss erzielt werden kann.

Gemäß einer bevorzugten Ausführungsform der vorliegenden Erfindung besitzt eine 0,1 Gew.-% Tensidlösung ein Ausbreitmass von ≥ 50 mm , d.h. es breiten sich 50 µl einer 0,1 Gew.-% Tensid enthaltende wässrigen Lösung auf einem hydrophoben Untergrund (Polypropylenfolie des Typs Forco-BOPP - durchsichtig, 40µm Dicke - der Firma van Leer in Forchheim, Deutschland) zu einem Film aus, der eine Fläche mit einem mittleren Durchmesser von ≥ 50 mm bedeckt.

Tenside dieser Art weisen sogenannte superspreitende-Eigenschaften auf und werden auch als Superspreiter oder "Super-Spreader" bezeichnet und haben sich innerhalb vieler Anwendungen der vorliegenden Erfindung als besonders vorteilhaft herausgestellt.

Ein Tensid ist ein Superspreiter, wenn das Hinzufügen einer kleinen Menge (0,1 Gew.-%) dieses Tensids zu einem kleinen Tropfen Wasser, letzteren dazu befähigt, sich auf einer hydrophoben Oberfläche innerhalb von Zehnteln einer Sekunde zu einem dünnen Film auszubreiten (S. Zhu, W.G. Miller, L. E. Scriven, H.T. Davis, Colloids and Surfaces A 90 (1994) 63) .

Bevorzugt besitzt eine 0,1 Gew.-% Tensidlösung ein Ausbreitmass von ≥ 60 mm, besonders bevorzugt ≥ 65 mm, ganz besonders bevorzugt ≥ 70 mm.

Gemäß einer bevorzugten Ausführungsform der vorliegenden Erfindung weist das Tensid ein Molekulargewicht von ≤1500 g/mol auf. Tenside dieser Größe sind bei den meisten Anwendungen der vorliegenden Erfindung besonders von Vorteil. Bevorzugt weist das Tensid ein Molekulargewicht von ≤1000 g/mol auf.

Gemäß einer bevorzugten Ausführungsform der vorliegenden Erfindung enthält das mindestens eine Tensid ein Material mit folgender Struktur I: 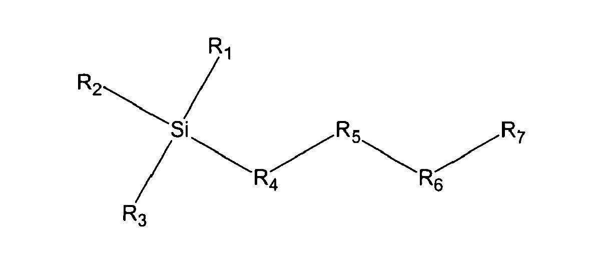 wobei R₁, R₂ und/oder R₃ unabhängig voneinander ausgewählt sind aus der Gruppe enthaltend Wasserstoff, Alkyl, langkettige Alkyl, Alkenyl, Alkoxy, langkettige Alkoxy, Cycloalkyl, Aryl, Halogenalkyl, Halogen, Pseudohalogen, Alkylsilyl, Alkylsilyloxy, R₄ ausgewählt ist aus der Gruppe enthaltend Alkylen, Alkendiyl, Arylen, Halogenalkyl, langkettiges Alkyl, Alkyl, Cycloalkyl, R₅ und R₆ Polyether sind, und R₇ ausgewählt ist aus der Gruppe enthaltend Wasserstoff, Hydroxy, Halogen, Alkyl, Carboxylat, Carbonyl, Sulfat, Sulfonat, Amin, Phosphonat, Phosphin, Phosphat, M und Ammonium.

Allgemeine Gruppendefinition: Innerhalb der Beschreibung und den Ansprüchen werden allgemeine Gruppen, wie z.B: Alkyl, Alkoxy, Aryl etc. beansprucht und beschrieben. Wenn nicht anders beschrieben, werden bevorzugt die folgenden Gruppen innerhalb der allgemein beschriebenen Gruppen im Rahmen der vorliegenden Erfindung verwendet:
Alkyl: lineare und verzweigte C1-C8-Alkyle,
langkettige Alkyle: lineare und verzweigte C5-C20 Alkyle
Alkenyl: C2-C6-Alkenyl,
Cycloalkyl: C3-C8-Cycloalkyl,
Alkoxy: C1-C6-Alkoxy,
langkettige Alkoxy: lineare und verzweigte C5-C20 Alkoxy
Alkylene: ein zweiwertiger linearer oder verzweigter aliphatischer, zykloaliphatischer oder aromatischer gegebenenfalls Heteroatome enthaltender Kohlenwasserstoffrest mit 2 bis 18 Kohlenstoffatomen ist, z.B. ausgewählt aus der Gruppe enthaltend: Methylen; 1,1-Ethylen; 1,2-Ethylen; 1,1-Propyliden; 1,2-Propylen; 1,3- Propylen; 2,2-Propyliden; Butan-2-ol-1,4-diyl; Propan-2-ol-1,3-diyl; 1, 4-Butylen; 1,4-Pentylen, 1,6-Hexylen, 1,7-Heptylen, 1,8-Octylen, 1,9-Nonylen, 1,10-Decylen, 1,11-Undecylen, 1,12-Docedylen, Cyclohexan-1,1-diyl; Cyclohexan-1,2-diyl; Cyclohexan-1,3- diyl; Cyclohexan-1,4-diyl; Cyclopentane-1,1-diyl; Cyclopentan-1,2-diyl; and Cyclopentan-1,3-diyl
Alkendiyl: ausgewählt aus der Gruppe enthaltend: 1,2-Propendiyl, 1,2-Butendiyl, 2,3-Butendiyl, 1,2-Pentendiyl, 2,3-Pentendiyl, 1,2-Hexendiyl, 2,3-Hexendiyl, 3,4-Hexendiyl
Alkindiyl gleich -C≡C- ist
Aryl: ausgewählt aus Aromaten mit einem Molekulargewicht unter 300 Da
Arylene: ausgewählt aus der Gruppe enthaltend: 1,2-Phenylen; 1,3- Phenylen; 1,4-Phenylen; 1,2-Naphtalenylen; 1,3-Naphtalenylen; 1,4- Naphtalenylen; 2,3-Naphtalenylen; 1-Hydroxy-2,3-phenylen; 1-Hydroxy-2,4- phenylen; 1-Hydroxy-2,5- phenylen; and 1-Hydroxy-2,6-phenylen,
Amine: die Gruppe -N(R)2 wobei jedes R unabhängig ausgewählt ist aus: Wasserstoff; C1-C6-alkyl; C1-C6-alkyl-C6H5; und Phenyl, wobei, wenn beide R C1-C6 Alkyl darstellen, diese einen NC3 bis NC5 heterocyclischen Ring bilden können, wobei die übrige Alkylkette Alkylsubsituenten des Rings bilden.
Hydroxy: -OH
Halogen: ausgewählt aus der Gruppe enthaltend: F; Cl; Br and I,
Halogenalkyl: ausgewählt aus der Gruppe enthaltend mono-, di-, tri-, poly and perhalogenated lineare und verzweigte C1-C8-alkyl
Pseudohalogen: ausgewählt aus der Gruppe enthaltend -CN, - SCN, -OCN, N3, -CNO, -SeCN
Sulphonate: die Gruppe -S(O)2OR, wobei R ausgewählt ist aus: Wasserstoff; Cl- C6-alkyl; phenyl; C1-C6-alkyl-C6H5; Li; Na; K; Cs; Mg; and Ca,
Sulphate: die Gruppe -OS(O)2OR, wobei R ausgewählt ist aus: Wasserstoff; Cl- C6-alkyl; phenyl; C1-C6-alkyl-C6H5; Li; Na; K; Cs; Mg; and Ca,
Sulphone: die Gruppe -S(O)2R, wobei R ausgewählt ist aus: Wasserstoff; C1-C6- alkyl; phenyl; C1-C6-Alkyl-C6H5 und Amine (resultierend in Sulphonamid) selected from die Gruppe: -NR'2, wobei jedes R' unabhängig ausgewählt ist aus: Wasserstoff; C1-C6-Alkyl; ClC6-Alkyl-C6H5; und Phenyl, und Phenyl, wobei, wenn beide R C1-C6 Alkyl darstellen, diese einen NC3 bis NC5 heterocyclischen Ring bilden können, wobei die übrige Alkylkette Alkylsubsituenten des Rings bilden.
Carboxylat : die Gruppe -C(O)OR, wobei R ausgewählt ist aus: Wasserstoff; C1-C6-Alkyl; Phenyl; C1-C6-Alkyl-C6H5; Li; Na; K; Cs; Mg; and Ca,
Carbonyl : die Gruppe -C(O)R, wobei R ausgewählt ist aus: Wasserstoff; C1-C6-Alkyl; Phenyl; C1-C6-Alkyl-C6H5 and Amin (resultierend in einem Amid) ausgewählt aus der Gruppe: - NR'2, wobei jedes R' unabhängig ausgewählt ist aus: Wasserstoff; Cl- C6-Alkyl; C1-C6-Alkyl-C6H5; und Phenyl, wobei, wenn beide R C1-C6 Alkyl darstellen, diese einen NC3 bis NC5 heterocyclischen Ring bilden können, wobei die übrige Alkylkette Alkylsubsituenten des Rings bilden.
Phosphonate: die Gruppe -P(O) (OR) 2, wobei jedes R unabhängig ausgewählt ist aus: Wasserstoff; C1-C6-Alkyl; Phenyl; C1-C6-Alkyl-C6H5; Li; Na; K; Cs; Mg; and Ca,
Phosphate: die Gruppe -OP(O)(OR)2, wobei jedes R unabhängig ausgewählt ist aus: Wasserstoff; C1-C6-Alkyl; Phenyl; C1-C6-Alkyl-C6H5; Li; Na; K; Cs; Mg; and Ca,
Phosphine: die Gruppe -P(R)2, wobei jedes R unabhängig ausgewählt ist aus: Wasserstoff; C1-C6-Alkyl; Phenyl; and C1-C6-Alkyl-C6H5,
Phosphine oxid: die Gruppe -P (O) R2, wobei R unabhängig ausgewählt ist aus: Wasserstoff; C1-C6-Alkyl; Phenyl; and C1-C6-Alkyl-C6H5 und Amin(Phosphonamidat) ausgewählt aus der Gruppe: -NR'2, wobei jedes R' unabhängig ausgewählt ist aus: Wasserstoff; C1-C6-Alkyl; C1-C6-Alkyl-C6H5; und Phenyl, wobei, wenn beide R C1-C6 Alkyl darstellen, diese einen NC3 bis NC5 heterocyclischen Ring bilden können, wobei die übrige Alkylkette Alkylsubsituenten des Rings bilden.
Polyether: ausgewählt aus der Gruppe enthaltend -(O-CH (R₁)-CH(R₂))ₙ- wobei R₁ und R₂ unabhängig ausgewählt sind aus: Wasserstoff, Alkyl, Aryl, Halogen und n gleich 1 bis 250 ist, bevorzugt gleich 1 bis 20 ist, sowie -(O-CH₂-CH(R))ₙ-OH und -(O-CH₂-CH(R))ₙ-OR wobei R unabhängig ausgewählt ist aus: Wasserstoff, Methyl, Ethyl, Propyl, Phenyl, Halogen und n gleich 1 bis 250, bevorzugt 1 bis 20 ist.
Alkylsilyl: die Gruppe -SiR₁R₂R₃ , wobei R₁, R₂ und R₃ unabhängig voneinander ausgewählt sind aus: Wasserstoff; Alkyl; langkettiges Alkyl, Phenyl, Cycloalkyl, Halogenalkyl, Alkoxy, langkettiges Alkoxy
Alkylsilyloxy: die Gruppe -O-SiR₁R₂R₃ , wobei R₁, R₂ und R₃ unabhängig voneinander ausgewählt sind aus: Wasserstoff; Alkyl; langkettiges Alkyl, Phenyl, Cycloalkyl, Halogenalkyl, Alkoxy, langkettiges Alkoxy
Ammonium: die Gruppe -N⁺R₁R₂R₃, wobei R₁, R₂ und R₃ unabhängig voneinander ausgewählt sind aus: Wasserstoff; Alkyl; langkettiges Alkyl, Phenyl, Cycloalkyl, Halogenalkyl, Alkoxy, langkettiges Alkoxy
M, Mₙ (n ist eine ganze Zahl): Metalle, wobei zwei Metalle M unabhängig voneinander ausgewählt sind, wenn nicht anders angezeigt.

Soweit nicht anders erwähnt, sind die folgenden Gruppen besonders bevorzugte Gruppen innerhalb der allgemeinen Gruppendefinition:
Alkyl: lineare und verzweigte C1-C6-Alkyl,
langkettige Alkyle: lineare und verzweigte C5-C10 Alkyl, vorzugsweise C6-C8 Alkyle
Alkenyl: C3-C6-Alkenyl,
Cycloalkyl: C6-C8-Cycloalkyl,
Alkoxy: Cl-C4-Alkoxy,
langkettige Alkoxy: lineare und verzweigte C5-C10 Alkoxy, vorzugsweise lineare C6-C8 Alkoxy
Alkylene: ein zweiwertiger linearer oder verzweigter aliphatischer, zykloaliphatischer oder aromatischer gegebenenfalls Heteroatome enthaltender Kohlenwasserstoffrest mit 2 bis 18 Kohlenstoffatomen ist, z.B. ausgewählt aus der Gruppe enthaltend: Methylen; 1,1-Ethylen; 1,2-Ethylen; 1,1-Propyliden; 1,2-Propylen; 1,3- Propylen; 2,2-Propyliden; Butan-2-ol-1,4-diyl; Propan-2-ol-1,3-diyl; 1, 4-Butylen; 1,4-Pentylen, 1,6-Hexylen, 1,7-Heptylen, 1,8-Octylen, 1,9-Nonylen, 1,10-Decylen, 1,11-Undecylen, 1,12-Docedylen, Cyclohexan-1,1-diyl; Cyclohexan-1,2-diyl; Cyclohexan-1,3- diyl; Cyclohexan-1,4-diyl; Cyclopentane-1,1-diyl; Cyclopentan-1,2-diyl; and Cyclopentan-1,3-diyl
Aryl: ausgewählt aus der Gruppe enthaltend: Phenyl; Biphenyl; Naphthalenyl; Anthracenyl; und Phenanthrenyl,
Arylen: ausgewählt aus der Gruppe enthaltend: 1,2-Phenylen; 1,3-Phenylen; 1,4-Phenylen; 1,2-Naphtalenylen; 1,4-Naphtalenylen; 2,3- Naphtalenylen and 1-Hydroxy-2,6-phenylen,
Amine: die Gruppe -N (R) 2, wobei jedes R unabhängig ausgewählt ist aus: Wasserstoff; C1-C6-Alkyl; und Benzyl,
Halogen: ausgewählt aus der Gruppe enthaltend: F and Cl,
Hydroxy: -OH
Sulphonate: die Gruppe -S(O)2OR, wobei R ausgewählt ist aus: Wasserstoff; Cl- C6-Alkyl; Na; K; Mg; and Ca,
Sulphate: die Gruppe -OS(O)2OR, wobei R ausgewählt ist aus: Wasserstoff; Cl- C6-Alkyl; Na; K; Mg; and Ca, Sulphone: die Gruppe -S(O)2R, wobei R ausgewählt ist aus: Wasserstoff; C1-C6- Alkyl; Benzyl and Amine ausgewählt aus der Gruppe: -NR'2, wobei jedes R' unabhängig ausgewählt ist aus: Wasserstoff; C1-C6-Alkyl; and Benzyl,
Carboxylat : die Gruppe -C(O)OR, wobei R ausgewählt ist aus Wasserstoff; Na; K; Mg; Ca; C1-C6-Alkyl; und Benzyl,
Carbonyl : die Gruppe -C(O)R, wobei R ausgewählt ist aus: Wasserstoff; Cl-C6-alkyl; Benzyl and Amine ausgewählt aus der Gruppe: -NR'2, wobei jedes R' unabhängig ausgewählt ist aus: Wasserstoff; C1-C6-alkyl; und Benzyl,
Phosphonate: die Gruppe -P(O) (OR)2, wobei jedes R unabhängig ausgewählt ist aus: Wasserstoff; Cl-C6-Alkyl; Benzyl; Na; K; Mg; and Ca,
Phosphate: die Gruppe -OP(O) (OR)2, wobei jedes R unabhängig ausgewählt ist aus: Wasserstoff; C1-C6-Alkyl; Benzyl; Na; K; Mg; and Ca,
Phosphine: die Gruppe -P(R)2, wobei jedes R unabhängig ausgewählt ist aus: Wasserstoff; C1-C6-Alkyl; and Benzyl,
Phosphine oxid: die Gruppe -P(O)R2, wobei R unabhängig ausgewählt ist aus: Wasserstoff; C1-C6-Alkyl; Benzyl und Amin ausgewählt aus der Gruppe: -NR'2, wobei jedes R' unabhängig ausgewählt ist aus: Wasserstoff; C1-C6-alkyl; und Benzyl.
Polyether: ausgewählt aus der Gruppe enthaltend -(O-CH(R₁)-CH(R₂))ₙ-, wobei R₁ und R₂ unabhängig ausgewählt sind aus: Wasserstoff, Methyl, Ethyl, Propyl, Phenyl, Halogen und n gleich 1 bis 50, bevorzugt 1 bis 15 ist, sowie -(O-CH₂-CH (R))ₙ-OH und - (O-CH₂-CH (R))ₙ-OR wobei R unabhängig ausgewählt ist aus: Wasserstoff, Methyl, Ethyl, Propyl, Phenyl, Halogen und n gleich 1 bis 50, bevorzugt 1 bis 15 ist.
Alkylsilyl: die Gruppe -SiR₁R₂R₃ , wobei R₁, R₂ und R₃ unabhängig voneinander ausgewählt sind aus: Wasserstoff; Methyl, Ethyl, Propyl, Phenyl; Methoxy, Ethoxy und Propoxy
Alkylsilyloxy: die Gruppe -O-SiR₁R₂R₃, wobei R₁, R₂ und R₃ unabhängig voneinander ausgewählt sind aus: Wasserstoff; Methyl, Ethyl, Propyl, Phenyl; Methoxy, Ethoxy und Propoxy
Ammonium: die Gruppe -N⁺R₁R₂R₃, wobei R₁, R₂ und R₃ unabhängig voneinander ausgewählt sind aus: Wasserstoff; Methyl, Ethyl, Propyl, Phenyl; langkettiges Alkyl, Benzyl, Cycloalkyl,
M, Mₙ (n ist eine ganze Zahl): Metalle, wobei zwei Metalle M unabhängig voneinander ausgewählt sind, wenn nicht anders angezeigt.

Gemäß einer bevorzugten Ausführungsform der vorliegenden Erfindung enthält das mindestens eine Tensid ein Material mit folgender Struktur II: 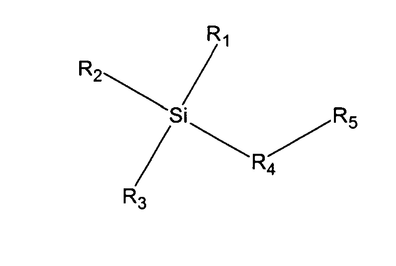 wobei R¹, R² und/oder R³ unabhängig voneinander ausgewählt sind aus der Gruppe enthaltend Wasserstoff, Alkyl, langkettige Alkyl, Alkenyl, Alkoxy, langkettige Alkoxy, Cycloalkyl, Aryl, Halogenalkyl, Halogen, Pseudohalogen, Alkylsilyl, Alkylsilyloxy, und R⁴ ausgewählt ist aus der Gruppe enthaltend Alkylen, Alkendiyl, Arylen, Halogenalkyl, langkettiges Alkyl, Alkyl, Cycloalkyl, Polyether, und R⁵ ausgewählt ist aus der Gruppe enthaltend Wasserstoff, Hydroxy, Halogen, Alkyl, Polyether, Carboxylat, Carbonyl, Sulfat, Sulfonat, Amin, Phosphonat, Phosphin, Phosphat, M und Ammonium.

Gemäß einer bevorzugten Ausführungsform der vorliegenden Erfindung enthält das mindestens eine Tensid ein Material mit folgender Struktur III: 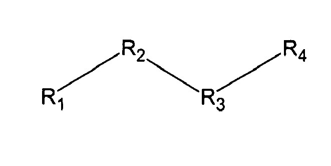 wobei R¹ ausgewählt ist aus der Gruppe enthaltend Wasserstoff, Alkyl, langkettige Alkyl, Alkenyl, Alkoxy, langkettige Alkoxy, Cycloalkyl, Aryl, Halogenalkyl, Halogen, Pseudohalogen, Alkylsilyl, Alkylsilyloxy, R² ausgewählt ist aus der Gruppe enthaltend Alkylen, Alkendiyl, Alkindiyl, Arylen, Halogenalkyl, langkettiges Alkyl, Alkyl, Cycloalkyl und Polyether, R³ gleich Polyether ist und R⁴ ausgewählt ist aus der Gruppe enthaltend Wasserstoff, Hydroxy, Alkyl, Carboxylat, Carbonyl, Sulfat, Sulfonat, Amin, Phosphonat, Phosphin, Phosphat, M und Ammonium.

Gemäß einer bevorzugten Ausführungsform der vorliegenden Erfindung enthält das mindestens eine Tensid ein Material mit folgender Struktur IV: 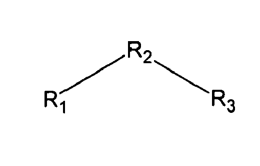 wobei R¹ ausgewählt ist aus der Gruppe enthaltend Wasserstoff, Alkyl, langkettige Alkyl, Alkenyl, Alkoxy, langkettige Alkoxy, Cycloalkyl, Aryl, Halogenalkyl, Halogen, Pseudohalogen, Alkylsilyl, Alkylsilyloxy, R² ausgewählt ist aus der Gruppe enthaltend Alkylen, Alkendiyl, Alkindiyl, Arylen, Halogenalkyl, langkettiges Alkyl, Alkyl, Cycloalkyl und Polyether, und
R³ ausgewählt ist aus der Gruppe enthaltend Wasserstoff, Hydroxy, Alkyl, Carboxylat, Carbonyl, Sulfat, Sulfonat, Amin, Phosphonat, Phosphin, Phosphat, M und Ammonium.

Gemäß einer bevorzugten Ausführungsform der vorliegenden Erfindung enthält das mindestens eine Tensid ein Material mit folgender Struktur V: 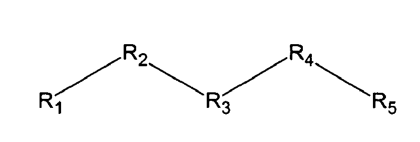 wobei
R¹ und R² unabhängig voneinander ausgewählt sind aus der Gruppe enthaltend Wasserstoff, Alkyl, langkettige Alkyl, Alkenyl, Alkylen, Alkoxy, langkettige Alkoxy, Cycloalkyl, Aryl, Halogenalkyl, Halogen, Pseudohalogen, Alkylsilyl, Alkylsilyloxy, Polyether und
R³ gleich Polyether oder Alkindiyl ist und
R⁴ gleich Alkylen oder Polyether ist und
R⁵ ausgewählt ist aus der Gruppe enthaltend Wasserstoff, Hydroxy, Alkyl, Carboxylat, Carbonyl, Sulfat, Sulfonat, Amin, Phosphonat, Phosphin, Phosphat, Polyether, M und Ammonium.

Gemäß einer bevorzugten Ausführungsform der vorliegenden Erfindung enthält das mindestens eine Tensid ein Material mit folgender Struktur VI: 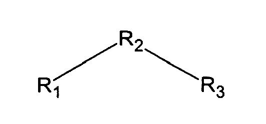 wobei R¹ und R² unabhängig voneinander ausgewählt sind aus der Gruppe enthaltend Wasserstoff, Alkyl, langkettige Alkyl, Alkenyl, Alkylen, Alkoxy, langkettige Alkoxy, Cycloalkyl, Aryl, Halogenalkyl, Halogen, Pseudohalogen, Alkylsilyl, Alkylsilyloxy, Polyether
und R³ ausgewählt ist aus der Gruppe enthaltend Wasserstoff, Hydroxy, Alkyl, Carboxylat, Carbonyl, Sulfat, Sulfonat, Amin, Phosphonat, Phosphin, Phosphat, Polyether, M und Ammonium.

Die vorliegende Erfindung bezieht sich ausserdem auf die Verwendung eines wie oben beschriebenen Tensids beim Herstellen und/oder Behandeln von Ingots und/oder Wafern.

Die vorliegende Erfindung bezieht sich ausserdem auf ein Verfahren für das Behandeln und/oder Herstellen von Ingots und/oder Wafern, wobei ein wie oben beschriebenes Kühlmittel verwendet wird.

Die vorgenannten sowie die beanspruchten und in den Ausführungsbeispielen beschriebenen erfindungsgemäß zu verwendenden Komponenten unterliegen in ihrer Größe, Formgestaltung, Materialauswahl und technischen Konzeption keinen besonderen Ausnahmebedingungen, so dass die in dem Anwendungsgebiet bekannten Auswahlkriterien uneingeschränkt Anwendung finden können.

Weitere Einzelheiten, Merkmale und Vorteile des Gegenstandes der Erfindung ergeben sich aus den Unteransprüchen sowie aus der nachfolgenden Beschreibung der zugehörigen Zeichnungen, in denen - beispielhaft - mehrere Ausführungsbeispiele unter Verwendung eines erfindungsgemäßen Kühlmittels dargestellt sind. In den Zeichnungen zeigt:

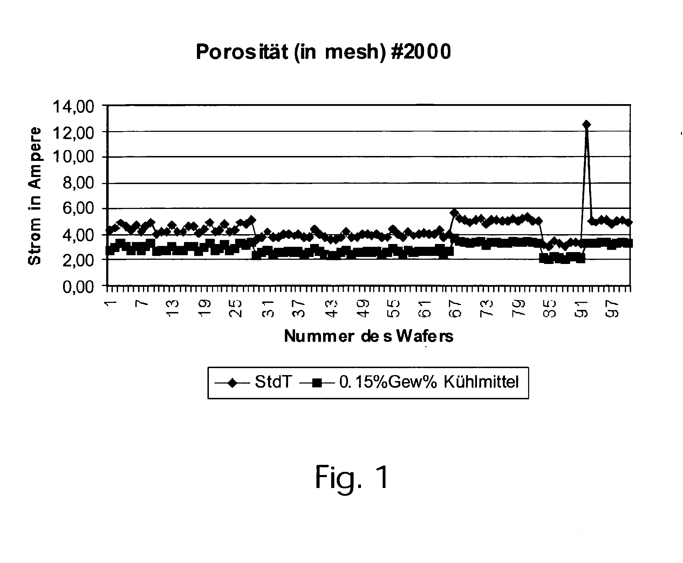

- Fig.1: ein Diagramm des Stromverbrauchs ("current draw") beim Schleifen von 100 Wafern mit einem Diamantschleifrad, welches eine Porosität bzw. Diamantkörnung von Mesh 2000 aufweist, gemäß eines Verfahrens nach dem Stand der Technik sowie unter Verwendung eines Kühlmittels nach einer Ausführungsform der Erfindung;

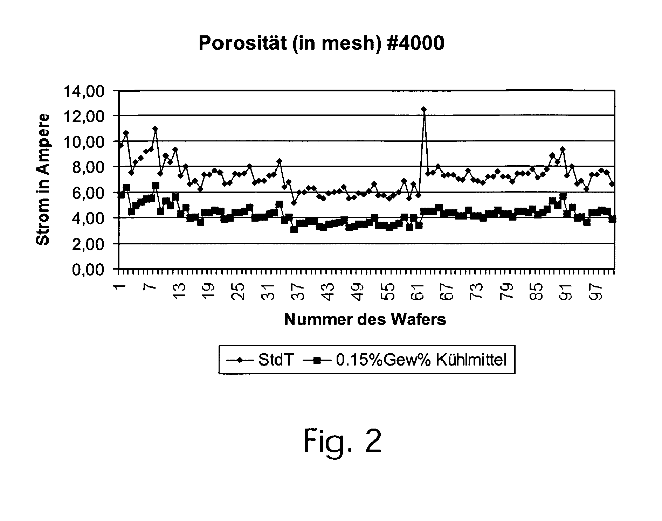

- Fig.2: ein Diagramm des Stromverbrauchs ("current draw") beim Schleifen von 100 Wafern mit einem Diamantschleifrad, welches eine Porosität bzw. Diamantkörnung von Mesh 4000 aufweist, gemäß eines Verfahrens nach dem Stand der Technik sowie unter Verwendung eines Kühlmittels nach einer Ausführungsform der Erfindung; sowie

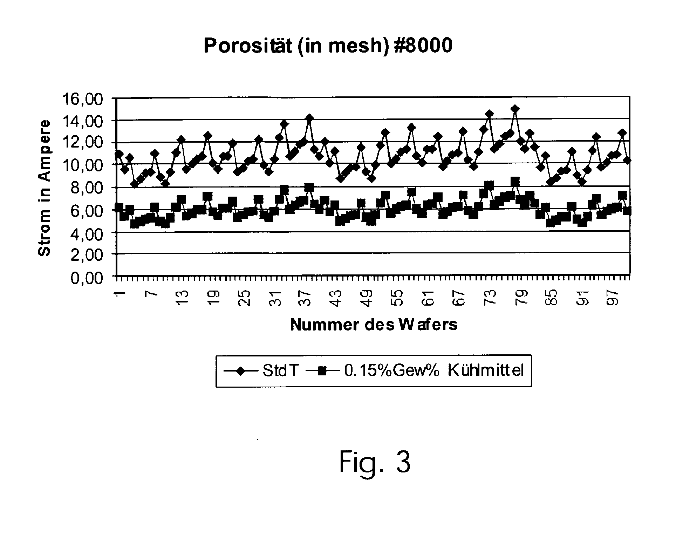

- Fig.3: ein Diagramm des Stromverbrauchs ("current draw") beim Schleifen von 100 Wafern mit einem Diamantschleifrad, welches eine Porosität bzw. Diamantkörnung von Mesh 8000 aufweist, gemäß eines Verfahrens nach dem Stand der Technik sowie unter Verwendung eines Kühlmittels nach einer Ausführungsform der Erfindung.

Fig. 1 zeigt ein Diagramm des Stromverbrauchs ("current draw") beim Schleifen von 100 Wafern mit einem Diamantschleifrad, welches eine Porosität bzw. Diamantkörnung von Mesh 2000 aufweist bei einem Schleifverfahren unter Verwendung eines Kühlmittels nach dem Stand der Technik, sowie einem Kühlmittel gemäß einer ersten Ausführungsform der Erfindung.

In dieser Ausführungsform wurde als Kühlmittel deionisiertes Wasser mit einer Konzentration von 0,15 Gew.-% eines Tensids verwendet. Eine Lösung dieses Tensids von 0,1 Gew.-% in deionisiertem Wasser hat bei 20 °C und einer Frequenz von 0,5 Hz eine Oberflächenspannung von 22,6 mN/m, gemessen nach der "dynamischen" Methode (gemäß Angaben des Herstellers mit einem "SITA science line t60" Meßgerät). Das Kühlmittel nach dem Stand der Technik ist dagegen nur deionisiertes Wasser.

Fig. 2 zeigt ein ähnliches Diagramm wie Fig. 1, wobei das gewählte Kühlmittel das gleiche ist; der einzige Unterschied ist die feinere Porosität bzw. Diamantkörnung (= Mesh 4000) des Schleifrads.

Fig.3 zeigt ein analoges Diagramm zu Fig. 1 und 2 mit einer noch feinerer Porosität bzw. Diamantkörnung (Mesh 8000)

Aus dem Stromverbrauch lassen sich Rückschlüsse hinsichtlich der Gleichmäßigkeit des Schleifprozesses sowie der Kraft, die auf die Waferoberfläche beim Schleifen einwirkt, ziehen. Allgemein lässt sich sagen, dass die auf die Waferoberfläche wirkenden Kräfte und die Abnutzung des Diamantschleifrades umso höher sind je höher der Stromverbrauch ist. Ferner lässt sich die Gleichmäßigkeit des Schleifprozesses anhand des Stromverbrauchs beurteilen. Die vorgenannten auf die Waferoberfläche beim Schleifen einwirkenden Kräfte sind einer der Hauptgründe für Schädigungen der Waferoberfläche und oberflächennaher Schichten. Zusätzlich ist anzumerken, dass sich oberhalb einer Belastung von 14A die Schleifmaschine automatisch aus Sicherheitsgründen abschaltet, wodurch wertvolle Zeit verloren geht, da der Schleifprozess in einem solchen Fall neu justiert werden muß. Zusammenfassend kann man sagen, dass zwischen der Qualität von Wafern insbesondere mit Blick auf Oberflächenbeschaffenheit (Ebenheit und Glätte) und Schädigungen und dem Stromverbrauch ein direkter Zusammenhang besteht - je weniger Strom verbraucht wird desto qualitativ hochwertiger sind die resultierenden Wafer.

Wie zu erwarten, steigt zunächst der Stromverbrauch und damit die Belastung der Wafer sowohl im Schleifprozess (Rückseitenschleifen von Wafern auf geringe Schichtdicken) bei den Wafern, die mit einem Verfahren nach dem Stand der Technik behandelt wurden, wie auch bei den Wafern, bei denen ein erfindungsgemäßes Kühlmittel verwendet wurde mit zunehmenden Mesh des Schleifrades. Größere Mesh Werte (#) bedeuten geringere Porengröße und feinere Diamantkörnung.

Dabei ist jedoch auffallend, dass insbesondere bei Mesh 8000 das Verfahren gemäß des Standes der Technik so hohe Belastungen auf die Wafer ausübt, dass sehr viele dieser Wafer eine verminderte Qualität aufweisen. Zudem kommen - wie in allen Figuren zu sehen - bei einem Kühlmittel nach dem Stand der Technik relativ viele "Ausreisser" vor, d.h. einerseits ist die Prozesssicherheit hinsichtlich eines kontinuierlichen Ablaufs nicht gewährleistet und andererseits ist mit einem stark erhöhten Anteil von ausschüssigen Wafer zu rechnen.

Dagegen führt der Einsatz eines erfindungsgemäßen Kühlmittels zum einen zu einer generell geringeren Belastung, bei Mesh 8000 sogar um einen Faktor 2, zum anderen werden keine oder so gut wie keine "Ausreisser" mehr zu beobachtet, d.h. der Produktionsprozess läuft generell zuverlässiger und genauer.

Geringere auf die Waferoberfläche wirkende Kräfte, was zu weniger Oberflächenschädigung führt, und ein insgesamt zuverlässigerer Schleifprozess sind Auswirkungen des Einsatzes von erfindungsgemäßen Tensiden. Diese Auswirkungen lassen sich "mikroskopisch" über den Stromverbrauch des Schleifprozesses fassen bzw. messen. Darüber hinaus werden aber auch mit dem bloßen Auge sichtbare positive Effekte festgestellt, die dem Einsatz der erfindungsgemäßen Tenside zugeschrieben werden können. So bleibt die Schleifkammer bei Verwendung der erfindungsgemäßen Kühlmittel sauber und auch die Abnutzung der Diamantschleifräder ist geringer im Vergleich zum Verfahren nach dem Stand der Technik. Die sauberere Schleifkammer deutet darauf hin, dass der Schleifstaub (vom Wafer abgetragenes Halbleitermaterial) und hierbei insbesondere gröbere Partikel besser aus dem Prozess entfernt werden, diese also nicht mehr so sehr auf der Waferoberfläche haften, was im Verfahren nach dem Stand der Technik in späteren Prozessschritten ein Problem darstellt und ebenfalls häufig zur Schädigung bis hin zur Zesrtörung der Wafer führt.

### Messmethoden

Die Oberflächenspannung einer 0,1 %-igen (Gew.-%) wässrigen (deionisiertes Wasser) Tensidlösung wurde bei 20 °C mit einem "SITA science line t60" Meßgerät bei 0,5 Hz gemäß Angaben des Herstellers bestimmt.

Die Spreitfläche - Fläche bzw. das Ausbreitmaß = mittlerer Durchmesser besagter Fläche, die ein Flüssigkeitsfilm bedeckt, wurde wie folgt bestimmt:

Bestimmt wurde die Fläche, die eine wässrige Lösung des zu untersuchenden Tensids bei einer Konzentration des Tensids von 0,1 Gew.-% auf einem definierten Substrat bedeckt (Flüssigkeitsfilm), wenn ein definiertes Volumen der besagten Lösung appliziert wird.

Hierfür wurde bei einer relativen Luftfeuchtigkeit von mindestens 40% zum einen die 0,1 %-ige wässrige Lösung mit deionisiertes Wasser hergestellt. Dann wurde eine definierte Polypropylenfolie (Firma van Leer in Forchheim, Deutschland, Typ: Forco-BOPP, Farbe: farblos und durchsichtig, Schichtdicke: 40µm) auf einer Glasplatte fixiert, die auf Millimeterpapier gelegt wurde. Mit Hilfe eine µl-Spritze bzw. Pipette wurden 50 µl aufgezogen und anschließend die Tensidlösung aus etwa 5 mm Höhe auf die Polypropylenfolie getropft. Nach 90 Sekunden wurde der äußere Rand des Flüssigkeitsfilmes, der sich ausgebildet hat, markiert. Mittels des Millimeterpapieres wurde nun der längste Durchmesser (a) und der kürzeste Durchmesser (b) des Flüssigkeitsfilmes gemessen und notiert. Diese Messung wird mindestens zweimal durchgeführt und der Mittelwert von (a) und (b) gebildet.

Die Spreitfläche (Ellipse) wird in cm² angegeben und ist definiert als (cm²) = (nab)/4. Hierüber errechnet sich dann auch das Ausbreitmaß, welches in mm angegeben wird; mm = 2√(A/π) .

## Patentansprüche

1. Kühlmittel zur Verwendung beim Herstellen und/oder Behandeln von Ingots und/oder Wafern,
**dadurch gekennzeichnet, dass** das Kühlmittel mindestens ein Tensid enthält.

2. Kühlmittel nach Anspruch 1, **dadurch gekennzeichnet, dass** der Anteil an Tensid ≥0 bis ≤1 Gew-% des Kühlmittels beträgt.

3. Kühlmittel nach Anspruch 1 oder 2, **dadurch gekennzeichnet, dass** 0,1 Gew.-% Tensid enthaltende wässrige (deionisiertes Wasser) Lösungen bei 20° und 0,5 Hz eine Oberflächenspannung von ≤ 35 mN/m aufweisen.

4. Kühlmittel nach einem der Ansprüche 1 bis 3, **dadurch gekennzeichnet, dass** eine 0,1 Gew.-% Tensidlösung ein Ausbreitmass von ≥ 50 mm besitzt

5. Kühlmittel nach einem oder mehreren der Ansprüche 1 bis 4, **dadurch gekennzeichnet, dass** das Tensid ein Molekulargewicht von ≤1500 (g/mol) aufweist.

6. Kühlmittel nach einem der Ansprüche 1 bis 5, **dadurch gekennzeichnet, dass** das Tensid ein Material mit folgender Struktur I enthält: 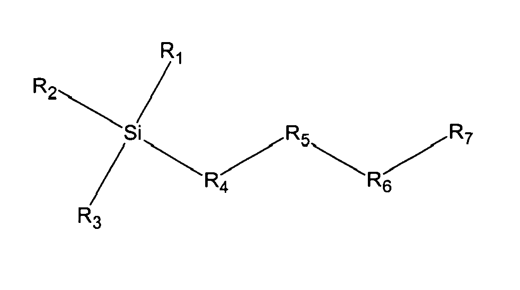 wobei R¹, R² und/oder R³ unabhängig voneinander ausgewählt sind aus der Gruppe enthaltend Wasserstoff, Alkyl, langkettige Alkyl, Alkenyl, Alkoxy, langkettige Alkoxy, Cycloalkyl, Aryl, Halogenalkyl, Halogen, Pseudohalogen, Alkylsilyl, Alkylsilyloxy, R⁴ ausgewählt ist aus der Gruppe enthaltend Alkylen, Alkendiyl, Arylen, Halogenalkyl, langkettiges Alkyl, Alkyl, Cycloalkyl, R⁵ und R⁶ Polyether sind, und R⁷ ausgewählt ist aus der Gruppe enthaltend Wasserstoff, Hydroxy, Halogen, Alkyl, Carboxylat, Carbonyl, Sulfat, Sulfonat, Amin, Phosphonat, Phosphin, Phosphat, M und Ammonium.

7. Kühlmittel nach mindestens einem der Ansprüche 1 bis 6, **dadurch gekennzeichnet, dass** das Tensid ein Material mit folgender Struktur II enthält: 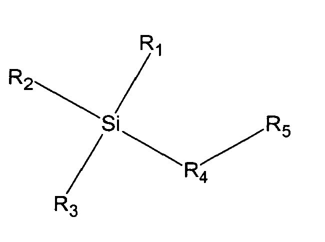 wobei R¹, R² und/oder R³ unabhängig voneinander ausgewählt sind aus der Gruppe enthaltend Wasserstoff, Alkyl, langkettige Alkyl, Alkenyl, Alkoxy, langkettige Alkoxy, Cycloalkyl, Aryl, Halogenalkyl, Halogen, Pseudohalogen, Alkylsilyl, Alkylsilyloxy, und R⁴ ausgewählt ist aus der Gruppe enthaltend Alkylen, Alkendiyl, Arylen, Halogenalkyl, langkettiges Alkyl, Alkyl, Cycloalkyl, Polyether und R⁵ ausgewählt ist aus der Gruppe enthaltend Wasserstoff, Hydroxy, Halogen, Alkyl, Polyether, Carboxylat, Carbonyl, Sulfat, Sulfonat, Amin, Phosphonat, Phosphin, Phosphat, M und Ammonium.

8. Kühlmittel nach mindestens einem der Ansprüche 1 bis 7, **dadurch gekennzeichnet, dass** das Tensid ein Material mit folgender Struktur III enthält: 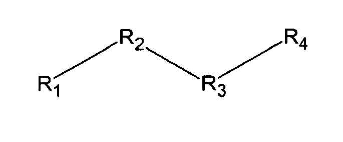 wobei R¹ ausgewählt ist aus der Gruppe enthaltend Wasserstoff, Alkyl, langkettige Alkyl, Alkenyl, Alkoxy, langkettige Alkoxy, Cycloalkyl, Aryl, Halogenalkyl, Halogen, Pseudohalogen, Alkylsilyl, Alkylsilyloxy,
R² ausgewählt ist aus der Gruppe enthaltend Alkylen, Alkendiyl, Alkindiyl, Arylen, Halogenalkyl, langkettiges Alkyl, Alkyl, Cycloalkyl und Polyether, R³ gleich Polyether ist und R⁴ ausgewählt ist aus der Gruppe enthaltend Wasserstoff, Hydroxy, Alkyl, Carboxylat, Carbonyl, Sulfat, Sulfonat, Amin, Phosphonat, Phosphin, Phosphat, M und Ammonium.

9. Kühlmittel nach mindestens einem der Ansprüche 1 bis 7, **dadurch gekennzeichnet, dass** das Tensid ein Material mit folgender Struktur IV enthält: 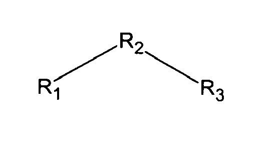 wobei R¹ ausgewählt ist aus der Gruppe enthaltend Wasserstoff, Alkyl, langkettige Alkyl, Alkenyl, Alkoxy, langkettige Alkoxy, Cycloalkyl, Aryl, Halogenalkyl, Halogen, Pseudohalogen, Alkylsilyl, Alkylsilyloxy, R² ausgewählt ist aus der Gruppe enthaltend Alkylen, Alkendiyl, Alkindiyl, Arylen, Halogenalkyl, langkettiges Alkyl, Alkyl, Cycloalkyl und Polyether, und
R³ ausgewählt ist aus der Gruppe enthaltend Wasserstoff, Hydroxy, Alkyl, Carboxylat, Carbonyl, Sulfat, Sulfonat, Amin, Phosphonat, Phosphin, Phosphat, M und Ammonium.

10. Kühlmittel nach mindestens einem der Ansprüche 1 bis 7, **dadurch gekennzeichnet, dass** das Tensid ein Material mit folgender Struktur V enthält: 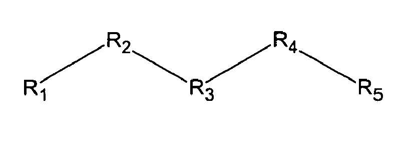 wobei R¹ und R² unabhängig voneinander ausgewählt sind aus der Gruppe enthaltend Wasserstoff, Alkyl, langkettige Alkyl, Alkenyl, Alkylen, Alkoxy, langkettige Alkoxy, Cycloalkyl, Aryl, Halogenalkyl, Halogen, Pseudohalogen, Alkylsilyl, Alkylsilyloxy, Polyether und
R³ gleich Polyether oder Alkindiyl ist und
R⁴ gleich Alkylen oder Polyether ist und
R⁵ ausgewählt ist aus der Gruppe enthaltend Wasserstoff, Hydroxy, Alkyl, Carboxylat, Carbonyl, Sulfat, Sulfonat, Amin, Phosphonat, Phosphin, Phosphat, Polyether, M und Ammonium.

11. Kühlmittel nach mindestens einem der Ansprüche 1 bis 7, **dadurch gekennzeichnet, dass** das Tensid ein Material mit folgender Struktur VI enthält: 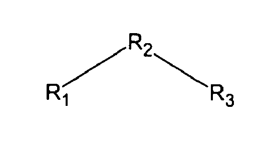 wobei R¹ und R² unabhängig voneinander ausgewählt sind aus der Gruppe enthaltend Wasserstoff, Alkyl, langkettige Alkyl, Alkenyl, Alkylen, Alkoxy, langkettige Alkoxy, Cycloalkyl, Aryl, Halogenalkyl, Halogen, Pseudohalogen, Alkylsilyl, Alkylsilyloxy, Polyether
und R³ ausgewählt ist aus der Gruppe enthaltend Wasserstoff, Hydroxy, Alkyl, Carboxylat, Carbonyl, Sulfat, Sulfonat, Amin, Phosphonat, Phosphin, Phosphat, Polyether, M und Ammonium.

12. Verwendung eines Tensids gemäß einem oder mehrerer der vorherigen Ansprüche beim Herstellen und/oder Behandeln von Ingots und/oder Wafern.

13. Verfahren für das Behandeln und/oder Herstellen von Ingots und/oder Wafern, **dadurch gekennzeichnet, dass** ein Kühlmittel nach einem der Ansprüche 1 bis 11 verwendet wird.
